(19) Europäisches Patentamt
European Patent Office
Office européen des brevets

(11) EP 4 186 365 A1

(12) EUROPÄISCHE PATENTANMELDUNG

(43) Veröffentlichungstag:
**31.05.2023 Patentblatt 2023/22**

(21) Anmeldenummer: **22203288.0**

(22) Anmeldetag: **24.10.2022**

(51) Internationale Patentklassifikation (IPC):
***A01N 35/06*** *(2006.01)* ***A01P 17/00*** *(2006.01)*

(52) Gemeinsame Patentklassifikation (CPC):
**A01N 35/06; A01P 17/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **29.11.2021 DE 102021131251**

(71) Anmelder:
- **Fraunhofer-Gesellschaft zur Förderung der angewandten Forschung e.V.**
  **80686 München (DE)**
- **AgPrime GmbH**
  **52499 Baesweiler (DE)**

(72) Erfinder:
- **Lee, Kwang-Zin**
  **35392 Giessen (DE)**
- **Vilcinskas, Andreas**
  **35392 Giessen (DE)**
- **Beckers, Gerold JM**
  **52499 Baesweiler (DE)**

(74) Vertreter: **Roth, Andy Stefan**
**Dr. Roth Patentanwaltskanzlei**
**Kaistrasse 5**
**40221 Düsseldorf (DE)**

(54) **PFLANZENSCHUTZVERFAHREN GEGEN DIE SCHILF-GLASFLÜGELZIKADE PENTASTIRIDIUS LEPORINUS**

(57) Die vorliegende Technologie bezieht sich auf Pflanzenschutzverfahren mittels Fernhalten der Schilf-Glasflügelzikade *Pentastiridius leporinus* von einer Pflanze, wobei das Verfahren das Aufbringen einer Zusammensetzung enthaltend Nootkaton und/oder ein Analogon oder Derivat von Nootkaton auf die Pflanze, Teile der Pflanze und/oder auf einen Ort neben der Pflanze umfasst, wodurch die Schilf-Glasflügelzikade von der Pflanze ferngehalten wird.

EP 4 186 365 A1

**Beschreibung**

Insekten verursachen weltweit in der Landwirtschaft Schäden in Milliardenhöhe. Wegen des Klimawandels und der Globalisierung des Handels wird vor allem die Bedrohung durch invasive Schadinsekten zukünftig noch zunehmen. Eine wirksame Kontrolle von Schadinsekten ist deshalb unabdingbar.

Die Glasflügelzikaden (Cixiidae) beispielsweise sind eine weltweit verbreitete Familie der Spitzkopfzikaden, innerhalb derer sie mit über 2100 Arten aus über 150 Gattungen eine der artenreichsten Familien darstellen. In Europa sind 149 Arten in 21 Gattungen vertreten, davon kommen in Mitteleuropa 34 Arten in 10 Gattungen und in Deutschland 20 Arten in 7 Gattungen vor.

Manche Glasflügelzikaden sind als Überträger von Pflanzenkrankheiten bekannt (z. B. die Winden-Glasflügelzikade *Hyalesthes obsoletus* an Weinreben in Mitteleuropa oder *Haplaxius crudus* an Palmen in der Karibik).

Die Schilfglasflügelzikade (SGFZ) *Pentastiridius leporinus* aus der Familie der Cixidae ist beispielsweise ein invasiver Pflanzenschädling, der in der Zuckerrübe das "Syndrom der niedrigen Zuckergehalte" (*syndrome des basses richesses*) überträgt. Dabei handelt es sich um eine Krankheit, die von einem Proteobakterium ("*Candidatus Arsenophonus phytopathogenicus*") und einem Phytoplasma *("Candidatus Phytoplasma solani"*) ausgelöst wird. 2020 waren ca. 20.000 ha befallen.

Die Schilf-Glasflügelzikade legt dabei ihre Eier im August im Boden von Zuckerrübenschlägen ab. Die geschlüpften Nymphen fressen unterirdisch an Zuckerrüben- und Weizenwurzeln. Nach der Überwinterung beenden die Nymphen ihre Entwicklung im folgenden Frühjahr in Winterweizen. Aus den Weizenschlägen startet der Zikadenflug ab Mai in angrenzende Zuckerrübenfelder bei der die Zikade das Bakterium beim Saugen an den Pflanzen überträgt.

Die ersten Symptome an der Zuckerrübe werden zum Ende des Sommers (ab Mitte August) sichtbar. Ältere Blätter zeigen Vergilbungen zwischen den Blattadern. Neuaustreibende Blätter sind sehr hell bis chlorotisch und lanzettlich. Der Rübenkörper zeigt bei den meisten SBR befallenen Zuckerrüben eine Verbräunung der Leitbündel sowie ein glasiges und durchscheinendes Parenchymgewebe.

Bislang wurde das Problem weitgehend durch die Anwendung synthetischer Insektizide aus der Substanzklasse der Neonicotinoide, Pyrethroide, Carbamate und Phosophosäureester gelöst (Beckmann, M. and K.-J. Haack, Insektizide für die Landwirtschaft: Chemische Schädlingsbekämpfung. Chemie in unserer Zeit, 2003. 37(2): p. 88-97). Die bisherige, intensive Nutzung der synthetischen Insektizide hat aber negative Auswirkungen, zum Beispiel den Verlust der Insektenvielfalt (Hallmann, C.A., et al., More than 75 percent decline over 27 years in total flying insect biomass in protected areas. PLoS One, 2017. 12(10): p. e0185809) und -damit verbunden- der Biodiversität.

Das in den vergangenen Jahren aufgetretene Bienensterben, welches mit dem Einsatz von chemischen Insektiziden in Verbindung gebracht wird ist eine wichtige, ökonomische und ökologische Komponente in diesem Problemfeld. Zudem wurden neurotoxische Effekte bei Menschen mit Kontakt zu synthetischen Insektiziden festgestellt.

Aufgabe der Erfindung ist es daher ein effektives Verfahren zur Bekämpfung der Schilfglasflügelzikade *Pentastiridius leporinus* bereitzustellen.

Diese Aufgabe wird durch die Verwendung einer Zusammensetzung enthaltend Nootkaton als Abschreckungsmittel im biologischen Pflanzenschutz gelöst.

In einem ersten Aspekt bezieht sich die vorliegende Erfindung auf Pflanzenschutzverfahren mittels mittels Fernhalten der Schilf-Glasflügelzikade *Pentastiridius leporinus* von einer Pflanze, wobei das Verfahren das Aufbringen einer Zusammensetzung enthaltend Nootkaton und/oder ein Analogon oder Derivat von Nootkaton auf die Pflanze, Teile der Pflanze und/oder auf einen Ort neben der Pflanze umfasst, wodurch die Schilf-Glasflügelzikade von der Pflanze ferngehalten wird, wenn das Insekt mit der Zusammensetzung oder Dämpfen der Zusammensetzung in Kontakt kommt.

Daher bezieht sich die vorliegende Erfindung auf die neue Verwendung einer Zusammensetzung enthaltend Nootkaton und/oder ein Analogon oder Derivat von Nootkaton zum Fernhalten der Schilf-Glasflügelzikade *Pentastiridius leporinus* von einer Pflanze, wobei eine Zusammensetzung enthaltend Nootkaton und/oder ein Analogon oder Derivat von Nootkaton auf die Pflanze, Teile der Pflanze und/oder auf einen Ort neben der Pflanze aufgebracht wird, wodurch die Schilf-Glasflügelzikade von der Pflanze ferngehalten wird, wenn das Insekt mit der Zusammensetzung oder Dämpfen der Zusammensetzung in Kontakt kommt.

Die in dem Pflanzenschutzverfahren verwendete Zusammensetzung ist vorzugsweise eine repellierende Formulierung gegen die Schilf-Glasflügelzikade, die für den Menschen und die Umwelt unbedenklich ist. Ein Vorteil eines Repellents ist, dass der Zielorganismus vergrämt und nicht getötet wird. Deshalb ist bei der Anwendung vergrämender Mittel der Vorteil einer geringeren Auswirkung auf die Zusammensetzung der Insektenvielfalt.

Nootkaton ((4R,4aS,6R)-6-Isopropenyl-4,4a-dimethyl-4,4a,5,6,7,8-hexahydro-2(3H)-naphthalinon oder 4a,5-Dimethyl-1,2,3,4,4a,5,6,7-octahydro-7-keto-3-isopropenyl-naphthalen) ist ein bicyclisches Sesquiterpen mit einem spezifischen, an Grapefruit erinnernden Aroma. Es kommt in zwei Enantiomeren vor, bei der das (+) -Nootkaton den spezifischen Grapefruitgeruch bzw. -aroma aufweist. Nootkaton kann mikrobiologisch oder synthetisch aus Valenzen hergestellt werden.

In einer bevorzugten Ausführung der vorliegenden Erfindung weist das in der Zusammensetzung verwendete

Nootkaton folgende Formel auf:

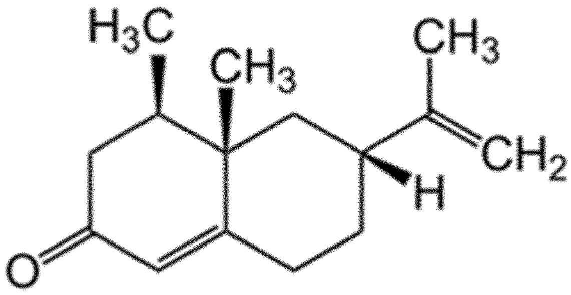

Bei den hierin verwendeten Zusammensetzungen handelt es sich um sichere, nichttoxische pestizide und schädlingsabwehrende Zusammensetzungen auf der Grundlage von Nootkaton und/oder Analoga von Nootkaton.

Die verwendeten Zusammensetzungen zum Fernhalten der Schilf-Glasflügelzikade *Pentastiridius leporinus* von einer Pflanze können in Form eines Aerosols, eines Riegels, einer Creme, eines Gels, einer Flüssigkeit, einer Lotion, einer Paste, eines Pulvers, eines Roll-on, einer Folie, eines Sprays, eines Sticks oder einer Tablette bereitgestellt werden.

Hierin werden Verfahren zum Fernhalten der Schilf-Glasflügelzikade *Pentastiridius leporinus* von einer Pflanze unter Verwendung einer hierin vorgesehenen Zusammensetzung enthaltend/umfassend Nootkaton und/oder ein Analogon oder Derivat von Nootkaton davon bereitgestellt. Bei den vorgesehenen Verfahren wird eine hierin eine solche Zusammensetzung zum Fernhalten der Schilf-Glasflügelzikade *Pentastiridius leporinus* von einer Pflanze, die mindestens 0,1 % bis mindestens 10 % oder mehr als 10 % oder mehr als 15 % oder mehr als 10 % oder mehr als 25 % Nootkaton und/oder ein Analogon oder Derivat von Nootkaton, bezogen auf das Gewicht der Zusammensetzung, enthält, bereitgestellt und auf die Pflanze, Teile der Pflanze und/oder auf einen Ort neben der Pflanze ausgebracht, wobei die Schilf-Glasflügelzikade vertrieben wird, wenn das Insekt mit der Zusammensetzung oder Dämpfen aus der Zusammensetzung in Kontakt kommt.

Bei den vorgesehenen Verfahren kann die Zusammensetzung durch Zerstäuben, Aufstreichen, Beschichten, Eintauchen, Tränken, Abtropfen, Bestäuben, Aufschäumen, Aufgießen, Einspritzen in oder auf, Gießen, Aufrollen, Verstreuen, Sprühen, Verteilen, Besprühen oder Abwischen der Zusammensetzung auf mindestens einen Teil der Pflanze und/oder auf einen Ort neben der Pflanze aufgebracht werden. In einigen Beispielen in den hierin vorgesehenen Verfahren enthält die Zusammensetzung von mindestens 0,1 % bis zu mindestens 10 % oder mehr als 10 % oder mehr als 15 % oder mehr als 20 % oder mehr als 25 % Nootkaton und/oder ein Analogon oder Derivat von Nootkaton, beispielsweise mindestens 1 %, 1. 1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3. 1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, 6%, 6.1%, 6.2%, 6.3%, 6. 4%, 6.5%, 6.6%, 6.7%, 6.8%, 6.9%, 7%, 7.1%, 7.2%, 7.3%, 7.4%, 7.5%, 7.6%, 7.7%, 7.8%, 7.9%, 8%, 8.1%, 8.2%, 8.3%, 8.4%, 8.5%, 8.6%, 8.7%, 8.8%, 8.9%, 9%, 9.1%, 9.2%, 9.3%, 9.4%, 9.5%, 9.6%, 9.7%, 9. 8%, 9.9%, 10%, 10.1%, 10.2%, 10.3%, 10.4%, 10.5%, 10.6%, 10.7%, 10.8%, 10.9%, 11%, 11.1%, 11.2%, 11.3%, 11.4%, 11.5%, 11.6%, 11.7%, 11.8%, 11.9%, 12%, 12.1%, 12.2%, 12.3%, 12.4%, 12.5%, 12.6%, 12. 7%, 12.8%, 12.9%, 13%, 13.1%, 13.2%, 13.3%, 13.4%, 13.5%, 13.6%, 13.7%, 13.8%, 13.9%, 14%, 14.1%, 14.2%, 14.3%, 14.4%, 14.5%, 14.6%, 14.7%, 14.8%,! 4.9%, 15%, 15.1%, 15.2%, 15.3%, 15.4%, 15.5%, 15. 6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18. 5 %, 18,6 %, 18,7 %, 18,8 %, 18,9 %, 19 %, 19,1 %, 19,2 %, 19,3 %, 19,4 %, 19,5 %, 19,6 %, 19,7 %, 19,8 %, 19,9 % oder 20 % Nootkaton oder Analogon oder Derivat von Nootkaton, bezogen auf das Gewicht der Zusammensetzung. In einigen Anwendungen ist das Nootkaton oder Nootkaton-Derivat oder deren Kombination in einer Menge von bis zu 99 Gew.-% der Zusammensetzung vorhanden.

Nootkaton ist ein Sesquiterpen, das natürlicherweise in Zitrusölen wie Orange und Grapefruit sowie in anderen Pflanzen vorkommt. Insbesondere ist Nootkaton ein Aromastoff der Grapefruit. Nootkaton wird nachgesagt, dass es hervorragende organoleptische Eigenschaften hat und insbesondere den typischen Geschmack und Geruch von Grapefruit vermittelt. Nootkaton wird in der Aromen- und Duftstoffindustrie verwendet, z. B. als Bestandteil von Parfüms und als Geschmacksstoff in Softdrinks und anderen Getränken.

Der Begriff "Derivat" bezieht sich hier auf eine chemische Substanz, die entweder direkt oder durch Modifikation oder partielle Substitution von einer anderen Substanz abgeleitet ist, und kann Unterschiede in einem Atom, Element oder einer Gruppe oder in mehr als einem Atom, Element oder einer Gruppe beinhalten.

Der Begriff "Analogon" bezieht sich in Bezug auf chemische Verbindungen auf eine chemische Verbindung, die eine ähnliche Struktur und ähnliche chemische Eigenschaften wie eine andere Verbindung aufweist, sich aber durch ein einziges Atom, ein Element oder eine Gruppe von ihr unterscheidet.

Analoga und Derivate von Nootkaton sind in der Fachwelt bekannt. Dazu gehören unter anderem Nootkaton-11,12-Epoxid, Nootkaton-1,10-Epoxid, Nootkaton-1,10-11,12-Diepoxid, Tetrahydronootkaton, 1,10-Dihydronootkaton, Isonootkaton und Nootkatol (siehe U.S. Patent Nr. 6,897,244 und 7,112,700 und WO 2002/050053). Beispielsweise kann die Umwandlung eines Enons in das entsprechende gesättigte Keton mit einem Alkalimetall (z. B. Na oder Li) in Gegenwart einer Protonenquelle (wie flüssiges Ammoniak, Ethanol oder beides) durchgeführt werden, um Tetrahydronootkaton herzustellen (siehe z. B. Adcock et al., J. Org. Chem. 47: 2951 (1982)). Nootkaton kann auch mit bekannten Methoden in Isonootkaton, Tetrahydronootkaton, 11,12-Dihyydronootkaton oder 1,10-Dihydronootkaton umgewandelt werden (Stevens et al., J. Sci. Fd. Agric. 21: 590-593 (1970)). Zhu et al. beschreibt die Umwandlung von Nootkaton in Nootkatol (J. Chem. Ecol. 29: 2695-2701 (2003)).

Nootkaton, das dominierende Grapefruit-Aroma, ist ein Oxidationsprodukt von Valencen. Nootkaton und seine Derivate und Analoga sind im Handel erhältlich, können aus Zellen extrahiert und/oder isoliert oder durch biosynthetische, chemische, rekombinante und/oder enzymatische Verfahren hergestellt werden. Zu den kommerziellen Zubereitungen von Nootkaton gehören beispielsweise Nootkaton, das von Sigma Aldrich (Produkt Nr. 74437 oder Produkt Nr. 93785; St. Louis, Mo.), Aromor Flavors &Fragrances Ltd. (Code Nr. 4101; Israel); und Bedoukian Research, Inc. (Produkt Nr. 800; Danbury, CT). Nootkaton kann auch aus Zellen extrahiert und/oder isoliert werden. Nootkaton kann beispielsweise aus natürlichen Quellen wie Valencia-Orangen oder Grapefruit, insbesondere Grapefruitöl, mit allgemein bekannten Methoden zur Isolierung und Reinigung von Terpenen isoliert werden. Methoden zur Extraktion oder Herstellung von Nootkaton sind in der Fachwelt gut bekannt. Beispiele für solche Verfahren sind in den US-Patenten Nr. 4,693,905, Nr. 4,973,485, Nr. 5,260,086, Nr. 6,495,193 und den US-Patentanmeldungen Nr. US20030185956 und US20030203090 beschrieben.

Nootkaton wird durch die Oxidation von Valencen gebildet. Valencen (1,2,3,5,6,7,8, 8a-Octahydro-7-isopropenyl-1,8a-dimethyl-naphthalin) kann regioselektiv hydroxyliert werden, um 2-Hydroxy-Valencen zu bilden, das weiter oxidiert wird, um Nootkaton zu bilden. Die selektive Oxidation von Valencen an der allylischen C2-Position führt zu cis- und trans-Nootkatol, das weiter zu Nootkaton oxidiert werden kann. Nootkaton kann also auch durch Oxidation aus Valencen mit Hilfe von Biosynthese-, chemischen oder Biokonversionsmethoden erzeugt werden. Die Oxidation von Valencen kann auf chemischem oder biosynthetischem Wege erfolgen (siehe z.B. U.S. Patent No. 5,847,226, Eur. Pat. Nr. EP1083233; Girhard et al, (2009) Microb. Cell. Fact. 8:36; Fraatz et al, (2009) Appl Microbiol Biotechnol. 83(1):35-41; Furusawa et al. (2005) Chem Pharm. Bull. 53: 1513-1514; Salvador et al, (2002) Green Chemistry, 4, 352-356). Die biochemische Oxidation kann durch eine Hydroxylase oder alternativ durch sequenzielle, enzymvermittelte Reaktionen durchgeführt werden. In einigen Beispielen wird Valencen mit Hilfe von Chromtrioxid oder einem mit Siliciumphosphonat immobilisierten Chrom(III)-Katalysator in Nootkaton umgewandelt. Das Valencen, das in solchen Prozessen verwendet wird, kann aus Zellen extrahiert oder isoliert oder wie unten beschrieben in Zellen, die Valencensynthase exprimieren, rekombinant erzeugt werden. Die Bildung von Nootkaton kann durch jedes der hier beschriebenen chromatographischen Verfahren bestätigt und/oder quantifiziert werden.So sind beispielsweise zahlreiche chemische und synthetische Verfahren zur Gewinnung von Nootkaton durch Oxidation von Valencen bekannt. Die chemische Synthese von Nootkaton aus Valencen kann mit tert-Butylchromat (Hunter et al. (1965) J. Food Sci, 30:876); tert-Butylperacetat (Wilson et al. (1978) J. Agric. Food Chem., 26: 1430); über Kupfer(I)-vermittelte Oxidation durch Alkylhydroperoxide (Salvador et al. (1997) Tetrahedron Lett. 38: 119-122) und mit oberflächenfunktionalisierter Kieselsäure und Metallkatalysatoren wie C0 $^{2+}$ und Mn $^{2+}$ (Salvador et al. (2002) Green Chem., 4:352- 356. Andere chemische Verfahren zur Herstellung von Nootkaton sind bekannt {z.B. siehe Hunter et al, Conversion of valencene to nootkatone, J Food Sci 30: 876-878 (1965) und Pesaro et al, The total synthesis ofracemic nootkatone, Chem Commun (London) 19: 1152-1154 (1968)).

Der hier verwendete Begriff "Fernhalten der Schilf-Glasflügelzikade *Pentastiridius leporinus* von einer Pflanze" bedeutet unter anderem, dass das Insekt von einer behandelten Pflanze oder einem Ort neben der Pflanze zurückgetrieben oder ferngehalten wird, so dass sich zu einem bestimmten Zeitpunkt weniger Insekten oder Schädlinge auf einer behandelten Pflanze befinden als auf einer unbehandelten Pflanze unter denselben Bedingungen. Obwohl eine Schilf-Glasflügelzikade auf einer behandelten Pflanze landen oder diese überqueren kann, bleibt das Insekt nicht über einen längeren Zeitraum auf der behandelten Pflanze oder bleibt nicht dort, um zu sondieren oder zu stechen oder die Pflanze anderweitig zu beschädigen.

Die vorliegende Erfindung bezieht sich daher insbesondere auf Pflanzenschutzverfahren mittels Fernhalten der Schilf-Glasflügelzikade *Pentastiridius leporinus* von einer Pflanze, wobei das Verfahren das Aufbringen einer Zusammensetzung enthaltend Nootkaton und/oder ein Analogon oder Derivat von Nootkaton auf die Pflanze, Teile der Pflanze und/oder auf einen Ort neben der Pflanze umfasst, wodurch die Schilf-Glasflügelzikade von der Pflanze ferngehalten wird, wenn das Insekt mit der Zusammensetzung oder Dämpfen der Zusammensetzung in Kontakt kommt.

Insbesondere umfasst der Schritt des Aufbringens das Zerstäuben, Aufpinseln, Beschichten, Eintauchen, Durchtränken, Abtropfen, Bestäuben, Aufschäumen, Aufgießen, Einspritzen, Gießen, Aufrollen, Verstreuen, Sprühen, Verteilen oder Besprühen der Zusammensetzung in oder auf mindestens einen Teil der Pflanze und/oder in oder auf einen Ort neben der Pflanze umfasst. Insbesondere ist die Konzentration von Nootkaton und/oder einem Analogon oder Derivat von Nootkaton in der Zusammensetzung mindestens 50 mg/L, mindestens 100 mg/L, mindestens 125 mg/L,

mindestens 150 mg/L mindestens 200 mg/L, mindestens 225 mg/L mindestens 250 mg/L oder mindestens 500 mg/L beträgt. Vorzugsweise ist die zu schützende Pflanze eine Zuckerrübe.

Besondere bevorzugt ist das in der Zusammensetzung enthaltene Nootkaton das (+)-Nootkaton Enantiomer. Vorzugsweise weist das in der Zusammensetzung enthaltene Nootkaton folgende Lewis-Struktur auf:

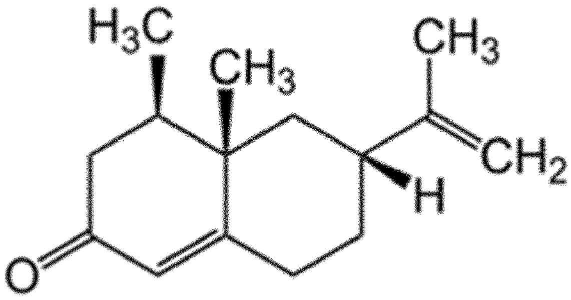

Insbesondere ist das in der Zusammensetzung enthaltene Nootkaton (4R,4aS,6R)-6-Isopropenyl-4,4a-dimethyl-4,4a,5,6,7,8-hexyhydro-2(3H)-naphtalinon.

Nach Labortests konnte eine repellierende Wirksamkeit von Nootkaton gegen die SGFZ aufgezeigt werden (siehe Tabelle 1). Der Versuchsaufbau wurde in einem Inkubator bei 25 °C und 80 % Luftfeuchte durchgeführt. Das Nootkaton wurde in die unten angegebenen Konzentrationen mit 100% Ethanol gelöst. Die Testbox hatte die Maße 21 × 8 cm und wurde mit einem Deckel (Luftloch mit Vlies) abgedeckt. Nach den jeweilig getesteten Zeitpunkten (1, 3, 6 und 24 Stunden) wurde der Bereich der Versuchstiere erfasst und mittels der Berechnung des Repellent Index (RI) in die unten aufgeführte Tabelle 1 mit Mittelwert eingetragen. Positive Werte entsprechen einer repellenten Wirkung, negative Werte einer anziehenden Wirkung.

**Tabelle 1**

| | Repellency index | | | |
|---|---|---|---|---|
| Concentration (mg/L) | 1 h | 3 h | 6 h | 24 h |
| 500 | 80,55±14,164 | 71,429±40,406 | 71,428±40,406 | 77,777±31,427 |
| 250 | 51,111±34,996 | 24,444±65,621 | 30±66,833 | 70,370±41,903 |
| 125 | 46,032±57,319 | 47,222±57,869 | 46,032±57,319 | 37,037±26,189 |

$$\text{Berechnung Repellent Index (RI)} = [(C-T)/C+T] \times 100$$

T= Treatment oder behandelte Seite
C= Control oder Kontrollseite
Positive Werte= Repellent
Negative Werte= Lockstoff

Abbildung 1 zeigt den Versuchsaufbau des Repellent Tests. 10 Nymphen der Schilf-Glasflügelzikade *Pentastiridius leporinus* wurden in der Mitte der Testbox platziert, wobei die Testbox in drei Bereiche a 7 cm Länge markiert wurde. Auf einer Seite (links), auf das Zuckerrübenstück einen Tropfen (20µl) Ethanol auftragen. Auf der anderen Seite, auf das Zuckerrübenstück einen Tropfen (20 µl) des Repellents in jeweiliger Verdünnung auftragen. Die Bereiche an denen die Nymphen sich befinden wurden an den definierten Zeitpunkten (1, 3, 6 und 24 Stunden) erfasst und mit je drei biologischen Wiederholungen durchgeführt.

## Patentansprüche

1. Pflanzenschutzverfahren mittels Fernhalten der Schilf-Glasflügelzikade *Pentastiridius leporinus* von einer Pflanze, wobei das Verfahren das Aufbringen einer Zusammensetzung enthaltend Nootkaton und/oder ein Analogon oder Derivat von Nootkaton auf die Pflanze, Teile der Pflanze und/oder auf einen Ort neben der Pflanze umfasst, wodurch die Schilf-Glasflügelzikade von der Pflanze ferngehalten wird, wenn das Insekt mit der Zusammensetzung oder Dämpfen der Zusammensetzung in Kontakt kommt.

2. Pflanzenschutzverfahren nach Anspruch 1, wobei der Schritt des Aufbringens das Zerstäuben, Aufpinseln, Beschichten, Eintauchen, Durchtränken, Abtropfen, Bestäuben, Aufschäumen, Aufgießen, Einspritzen, Gießen, Aufrollen, Verstreuen, Sprühen, Verteilen oder Besprühen der Zusammensetzung in oder auf mindestens einen Teil der Pflanze und/oder in oder auf einen Ort neben der Pflanze umfasst.

3. Pflanzenschutzverfahren nach einem der Ansprüche 1 bis 2, wobei die Konzentration von Nootkaton und/oder einem Analogon oder Derivat von Nootkaton in der Zusammensetzung mindestens 50 mg/L, mindestens 100 mg/L, mindestens 125 mg/L, mindestens 150 mg/L mindestens 200 mg/L, mindestens 225 mg/L mindestens 250 mg/L oder mindestens 500 mg/L beträgt.

4. Pflanzenschutzverfahren nach einem der Ansprüche 1 bis 3, wobei die Pflanze eine Zuckerrübe ist.

5. Pflanzenschutzverfahren nach einem der Ansprüche 1 bis 4, wobei das in der Zusammensetzung enthaltene Nootkaton das (+)-Nootkaton Enantiomer ist.

6. Pflanzenschutzverfahren nach einem der Ansprüche 1 bis 5, wobei das in der Zusammensetzung enthaltene Nootkaton folgende Lewis-Struktur aufweist:

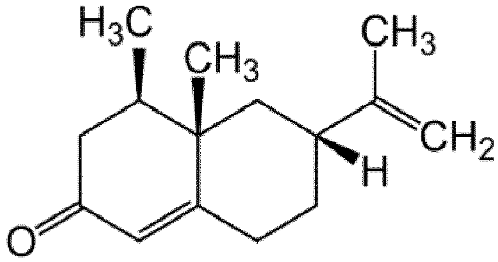

7. Pflanzenschutzverfahren nach einem der Ansprüche 1 bis 5, wobei das in der Zusammensetzung enthaltene Nootkaton (4R,4aS,6R)-6-Isopropenyl-4,4a-dimethyl-4,4a,5,6,7,8-hexyhydro-2(3H)-naphtalinon ist.

8. Verwendung einer Zusammensetzung enthaltend Nootkaton und/oder ein Analogon oder Derivat von Nootkaton zum Fernhalten der Schilf-Glasflügelzikade *Pentastiridius leporinus* von einer Pflanze, wobei eine Zusammensetzung enthaltend Nootkaton und/oder ein Analogon oder Derivat von Nootkaton auf die Pflanze, Teile der Pflanze und/oder auf einen Ort neben der Pflanze aufgebracht wird, wodurch die Schilf-Glasflügelzikade von der Pflanze ferngehalten wird, wenn das Insekt mit der Zusammensetzung oder Dämpfen der Zusammensetzung in Kontakt kommt.

9. Verwendung nach Anspruch 8, wobei der Schritt des Aufbringens das Zerstäuben, Aufpinseln, Beschichten, Eintauchen, Durchtränken, Abtropfen, Bestäuben, Aufschäumen, Aufgießen, Einspritzen, Gießen, Aufrollen, Verstreuen, Sprühen, Verteilen oder Besprühen der Zusammensetzung in oder auf mindestens einen Teil der Pflanze und/oder in oder auf einen Ort neben der Pflanze umfasst.

10. Verwendung nach einem der Ansprüche 8 bis 9, wobei die Konzentration von Nootkaton und/oder einem Analogon oder Derivat von Nootkaton in der Zusammensetzung mindestens 50 mg/L, mindestens 100 mg/L, mindestens 125 mg/L, mindestens 150 mg/L mindestens 200 mg/L, mindestens 225 mg/L mindestens 250 mg/L oder mindestens 500 mg/L beträgt.

11. Verwendung nach einem der Ansprüche 8 bis 10, wobei die Pflanze eine Zuckerrübe ist.

12. Verwendung nach einem der Ansprüche 8 bis 11, wobei das in der Zusammensetzung enthaltene Nootkaton das (+)-Nootkaton Enantiomer ist.

13. Verwendung nach einem der Ansprüche 8 bis 12, wobei das in der Zusammensetzung enthaltene Nootkaton folgende Lewis-Struktur aufweist:

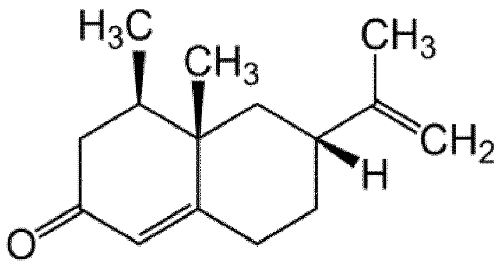

**14.** Verwendung nach einem der Ansprüche 8 bis 13, wobei das in der Zusammensetzung enthaltene Nootkaton (4R,4aS,6R)-6-Isopropenyl-4,4a-dimethyl-4,4a,5,6,7,8-hexyhydro-2(3H)-naphtalinon ist.

**Abbildung 1**

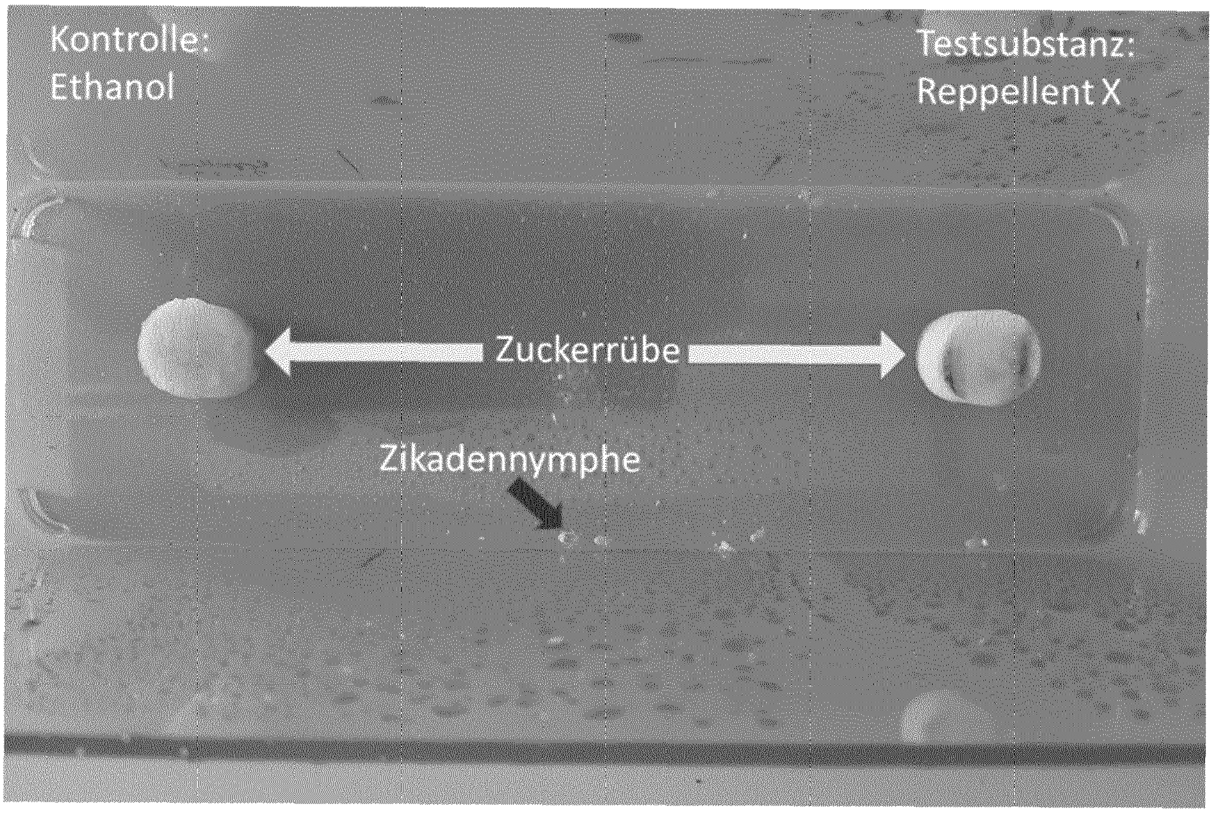
Kontrolle:
Ethanol
Testsubstanz:
Reppellent X
Zuckerrübe
Zikadennymphe

Europäisches Patentamt
European Patent Office
Office européen des brevets

# EUROPÄISCHER RECHERCHENBERICHT

Nummer der Anmeldung
EP 22 20 3288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | MAO LIXIN ET AL: "Evaluation of potential use of nootkatone against maize weevil (Sitophilus zeamais Motschulsky) and rice weevil [S. oryzae (L.)](Coleoptera: Curculionidae)", JOURNAL OF STORED PRODUCTS RESEARCH., Bd. 46, Nr. 2, 1. April 2010 (2010-04-01), Seiten 129-132, XP093032505, GB ISSN: 0022-474X, DOI: 10.1016/j.jspr.2010.01.002 Gefunden im Internet: URL:https://reader.elsevier.com/reader/sd/pii/S0022474X10000226> * Zusammenfassung * * Abschnitt 3 * * Tabellen 1, 2 * * Abbildungen 2, 3 * ----- -/-- | 1-4,8-11 | INV. A01N35/06 A01P17/00 |
| | | | **RECHERCHIERTE SACHGEBIETE (IPC)** |
| | | | A01N A01P |

Der vorliegende Recherchenbericht wurde für alle Patentansprüche erstellt

| Recherchenort | Abschlußdatum der Recherche | Prüfer |
|---|---|---|
| München | 17. März 2023 | Habermann, Jörg |

1

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 22 20 3288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Ibrahim Sanaa A ET AL: "Toxicity and Behavioral Effects of Nootkatone, 1,10-Dihydronootkatone, and Tetrahydronootkatone to the Formosan Subterranean Termite (Isoptera: Rhinotermitidae)", Journal of Economic Entomology, 1. Februar 2004 (2004-02-01), Seiten 102-111, XP093032507, DOI: 10.1093/jee/97.1.102 Gefunden im Internet: URL:https://academic.oup.com/jee/article/97/1/102/2217939 [gefunden am 2023-03-17] * Zusammenfassung * * Seite 105, Spalte 1, Zeile 31 - Zeile 38 * * Seite 106, Spalte 1, Zeile 3 - Zeile 13 * * Seite 107, Spalte 2, Zeile 55 - Zeile 60 * * Tabellen 1, 2 * ----- | 1-4,8-11 | |
| | | | RECHERCHIERTE SACHGEBIETE (IPC) |
| Y | ANDERSON J A ET AL: "Acetylcholinesterase inhibition by nootkatone and carvacrol in arthropods", PESTICIDE BIOCHEMISTRY AND PHYSIOLOGY, ACADEMIC PRESS, US, Bd. 102, Nr. 2, 18. Dezember 2011 (2011-12-18), Seiten 124-128, XP028459192, ISSN: 0048-3575, DOI: 10.1016/J.PESTBP.2011.12.002 [gefunden am 2012-01-13] * Zusammenfassung * * Seite 124, Spalte 1, Zeile 16 - Zeile 20 * * Tabelle 1 * ----- -/-- | 1-4,8-11 | |

Der vorliegende Recherchenbericht wurde für alle Patentansprüche erstellt

1

| Recherchenort | Abschlußdatum der Recherche | Prüfer |
|---|---|---|
| München | 17. März 2023 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 22 20 3288

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | WO 2017/162887 A1 (EVOLVA SA [CH]) 28. September 2017 (2017-09-28)<br>* Absätze [0016], [0025] *<br>* Abbildungen 1-3, 5, 6 *<br>* Ansprüche 1, 16 *<br>----- | 1-4,8-11 | |
| Y | .: "Kleine Schilf-Glasflügelzikade überträgt neue Rübenkrankheit", IVA-Magazin, 10. Mai 2013 (2013-05-10), Seite 1, XP093032557, Germany<br>Gefunden im Internet: URL:https://www.iva.de/iva-magazin/umwelt-verbraucher/kleine-schilf-glasfluegelzikade-uebertraegt-neue-ruebenkrankheit [gefunden am 2023-03-17]<br>* das ganze Dokument *<br>----- | 1-4,8-11 | |
| Y | .: "Syndrome Basses Richesses - SBR", Agroscope Merkblatt Nr. 97, 1. Januar 2019 (2019-01-01), Seiten 1-2, XP093032561, Schweiz<br>Gefunden im Internet: URL:https://www.zuckerruebe.ch/fileadmin/pdf/2021/Merkblatt_SBR.pdf [gefunden am 2023-03-17]<br>* das ganze Dokument *<br>----- | 1-4,8-11 | RECHERCHIERTE SACHGEBIETE (IPC) |

-/--

Der vorliegende Recherchenbericht wurde für alle Patentansprüche erstellt

1

| Recherchenort | Abschlußdatum der Recherche | Prüfer |
|---|---|---|
| München | 17. März 2023 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 22 20 3288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Schwabe Kristin: "Schädlingskontrolle im Zuckerrübenanbau: Worauf müssen wir uns einstellen?", Fachveranstaltung Pflanzenschutz in Ackerbau 2019, 24. Januar 2019 (2019-01-24), Seiten 1-43, XP093032587, Germany Gefunden im Internet: URL:https://www.isip.de/isip/servlet/resource/blob/286968/2cc449a124d2aeaec6bca05d7a43db39/schwabe--fs-ab-2019-data.pdf [gefunden am 2023-03-17] * Seite 15 - Seite 29 * ----- | 1-4,8-11 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| München | 17. März 2023 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 22 20 3288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2023

| Im Recherchenbericht angeführtes Patentdokument | Datum der Veröffentlichung | Mitglied(er) der Patentfamilie | Datum der Veröffentlichung |
|---|---|---|---|
| WO 2017162887 A1 | 28-09-2017 | EP 3432709 A1 | 30-01-2019 |
| | | US 2019069543 A1 | 07-03-2019 |
| | | WO 2017162887 A1 | 28-09-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6897244 B
- US 7112700 B
- WO 2002050053 A
- US 4693905 A
- US 4973485 A
- US 5260086 A
- US 6495193 B
- US 20030185956 A
- US 20030203090 A
- US 5847226 A
- EP 1083233 A


### In der Beschreibung aufgeführte Nicht-Patentliteratur


- **BECKMANN, M. ; K.-J. HAACK.** Insektizide für die Landwirtschaft: Chemische Schädlingsbekämpfung. *Chemie in unserer Zeit,* 2003, vol. 37 (2), 88-97
- **HALLMANN, C.A. et al.** More than 75 percent decline over 27 years in total flying insect biomass in protected areas. *PLoS One,* 2017, vol. 12 (10), e0185809
- **B. ADCOCK et al.** *J. Org. Chem.,* 1982, vol. 47, 2951
- **STEVENS et al.** *J. Sci. Fd. Agric.,* 1970, vol. 21, 590-593
- **ZHU et al.** beschreibt die Umwandlung von Nootkaton in Nootkatol. *J. Chem. Ecol.,* 2003, vol. 29, 2695-2701
- **GIRHARD et al.** *Microb. Cell. Fact.,* 2009, vol. 8, 36
- **FRAATZ et al.** *Appl Microbiol Biotechnol.,* 2009, vol. 83 (1), 35-41
- **FURUSAWA et al.** *Chem Pharm. Bull.,* 2005, vol. 53, 1513-1514
- **SALVADOR et al.** *Green Chemistry,* 2002, vol. 4, 352-356
- **HUNTER et al.** *J. Food Sci,* 1965, vol. 30, 876
- **WILSON et al.** *J. Agric. Food Chem.,* 1978, vol. 26, 1430
- **SALVADOR et al.** *Tetrahedron Lett.,* 1997, vol. 38, 119-122
- **SALVADOR et al.** *Green Chem.,* 2002, vol. 4, 352-356
- **HUNTER et al.** Conversion of valencene to nootkatone. *J Food Sci,* 1965, vol. 30, 876-878
- **PESARO et al.** The total synthesis ofracemic nootkatone. *Chem Commun (London),* 1968, vol. 19, 1152-1154